# EUROPÄISCHE PATENTSCHRIFT

(11) **EP 2 820 217 B1**
(45) Veröffentlichungstag und Bekanntmachung des Hinweises auf die Patenterteilung: **08.07.2020**
(21) Anmeldenummer: 13704431.9
(22) Anmeldetag: 14.02.2013
(51) Int. Cl.: F16B 5/02, F16B 37/08, E05F 5/02

(54) **VORRICHTUNG ZUM TOLERANZAUSGLEICHENDEN BEFESTIGEN EINES ANBAUTEILES AN EINEM TRÄGERTEIL**
DEVICE FOR TOLERANCE-COMPENSATING FASTENING OF AN ATTACHMENT PART TO A CARRIER PART
DISPOSITIF PERMETTANT LA FIXATION AVEC COMPENSATION DE TOLÉRANCES D'UN ÉLÉMENT RAPPORTÉ SUR UNE PARTIE SUPPORT

(30) Priorität: 29.02.2012 DE 102012203147
(43) Veröffentlichungstag der Anmeldung: 07.01.2015
(73) Patentinhaber: A. RAYMOND et Cie, 38000 Grenoble (FR)
(72) Erfinder: HAUSER, Ingo, 79400 Kandern (DE)
(74) Vertreter: König Szynka Tilmann von Renesse Patentanwälte Partnerschaft mbB
(86) Internationale Anmeldenummer: PCT/EP2013/052975
(87) Internationale Veröffentlichungsnummer: WO 2013/127638

(56) Entgegenhaltungen:
- EP-A2- 2 147 813
- DE-A1-102009 022 809
- FR-A1- 2 565 649
- US-A- 6 119 306

## Beschreibung

Die Erfindung betrifft eine Vorrichtung zum toleranzausgleichenden Befestigen eines Anbauteiles an einem Trägerteil gemäß dem Oberbegriff des Patentanspruches 1.

Eine derartige Vorrichtung ist aus EP 2 147 813 A2 bekannt. Diese Vorrichtung zum toleranzausgleichenden Befestigen eines Anbauteiles an einem Trägerteil verfügt über eine Auflageplatte und über eine Anzahl von mit der Auflageplatte verbundenen, in radialer Richtung federnd ausgebildete Federarme. In einem axialen Abstand von der Auflageplatte ist ein Fußring vorhanden, an den die von der Auflageplatte abgewandten Enden der Federarme angeformt sind. Der Fußring ist über eine Anzahl von Verbindungsstegen mit der Auflageplatte verbunden, wobei jeder Federarm in Umfangsrichtung zwischen zwei Verbindungsstegen angeordnet ist. Bei der vorbekannten Vorrichtung sind Verbindungsstege gerade ausgebildet und tragen an ihren der Auflageplatte zugewandten Enden nach radial außen vorstehende Zentrierelemente.

Eine weitere Vorrichtung zum toleranzausgleichenden Befestigen eines Anbauteiles an einem Trägerteil ist aus DE 10 2009 022 809 A1 bekannt. Diese vorbekannte Vorrichtung verfügt über eine Auflageplatte und über eine Anzahl von Federarmen, die mit einem sich in axialer Richtung erstreckenden Innenschenkel mit der Auflageplatte verbunden sind und einen Außenschenkel aufweisen, der an dem von der Auflageplatte abgewandten Ende des Innenschenkels mit dem Innenschenkel verbunden ist und sich von dem Innenschenkel weg weisend schräg in Richtung der Auflageplatte erstreckt. Die Federarme sind federnd ausgebildet, wobei sich die Innenschenkel an dem Rand einer in einem Trägerteil, das zwischen der Auflageplatte und den freien Enden der Innenschenkel angeordnet ist, ausgebildeten Durchsteckausnehmung zum Fixieren der Vorrichtung an dem Trägerteil abstützen. Durch die federnde Ausbildung der Federarme ist ein gewisser Toleranzausgleich bei dem Anordnen der Vorrichtung in der Trägerteilausnehmung vorhanden, der durch den Anschlag der Außenschenkel an die Innenschenkel der Federarme begrenzt ist.

Der Erfindung liegt die Aufgabe zugrunde, eine Vorrichtung der eingangs genannten Art anzugeben, die sich durch einen verhältnismäßig hohen Toleranzausgleich beim Anordnen in einer in einem Anbauteil eingebrachten Ausnehmung auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung der Fußring über Fußabschnitte und gegenüber den Fußabschnitten nach radial innen versetzte Kopfabschnitte aufweisende Verbindungsstege mit der Auflageplatte verbunden ist, ist ein durch die Möglichkeit des Durchtauchens der Federarme zwischen die Verbindungsstege und des Bewegens eines Randabschnittes einer in einem Anbauteil eingebrachten Aufnahmeausnehmung nach radial innen über die Fußabschnitte hinaus bis zu den Kopfabschnitten ein sehr hoher Toleranzausgleich erzielt, der allein durch den Anschlag der Kopfabschnitte der Verbindungsstege an dem Rand der Ausnehmung begrenzt ist.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer erfindungsgemäßen Vorrichtung in einer Ansicht auf die einem Fußabschnitt zugewandte Seite einer Auflageplatte,
- Fig. 2: in einer Seitenansicht das Ausführungsbeispiel gemäß Fig. 1,
- Fig. 3: in einer perspektivischen Ansicht das Ausführungsbeispiel gemäß Fig. 1 mit Blick auf die einem Kopfabschnitt zugewandte Seite der Auflageplatte,
- Fig. 4: in einem Längsschnitt das Ausführungsbeispiel gemäß Fig. 1 beim Verbinden eines Anbauteiles mit einem Trägerteil in einer ersten Endmontageanordnung und
- Fig. 5: in einem Längsschnitt das Ausführungsbeispiel gemäß Fig. 1 beim Verbinden eines Anbauteiles mit einem Trägerteil in einer zweiten Endmontageanordnung.

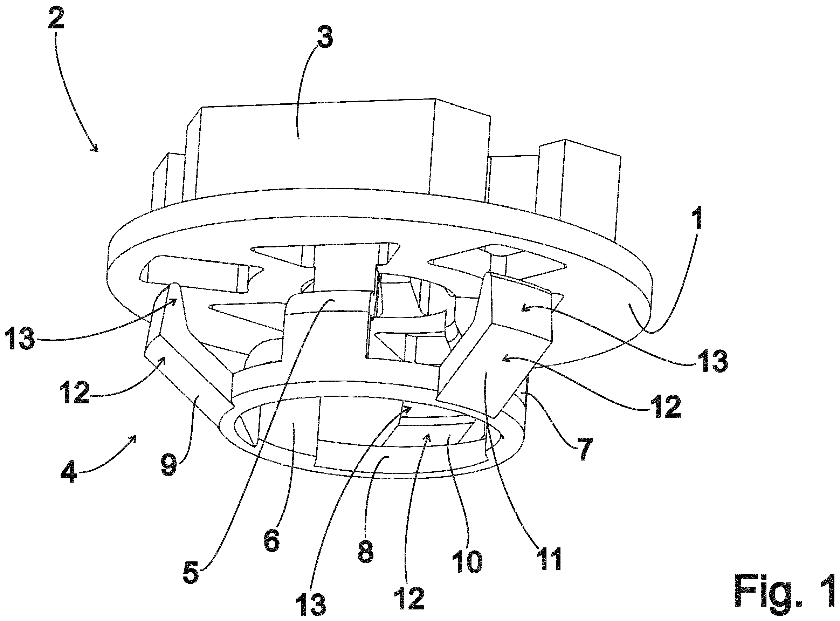

Fig. 1 zeigt in einer perspektivischen Ansicht ein Ausführungsbeispiel einer erfindungsgemäßen Vorrichtung, das zweckmäßigerweise aus einem hartelastischen Kunststoffmaterial hergestellt ist. Das Ausführungsbeispiel gemäß Fig. 1 verfügt über eine hier kreisförmige Auflageplatte 1, die in einem in der Darstellung gemäß Fig. 1 dem Betrachter abgewandten Kopfteil 2 eine Werkzeugansatzstruktur 3 trägt. In einem in der Darstellung gemäß Fig. 1 dem Betrachter zugewandten Fußteil 4 sind an die Auflageplatte 1 eine Anzahl von Verbindungsstegen 5, 6, 7 angeformt, die an ihren der Auflageplatte 1 abgewandten Enden mit einem kreisförmigen geschlossenen Fußring 8, der in einem Abstand von der Auflageplatte 1 angeordnet ist, verbunden sind.

An den Fußring 8 wiederum sind eine Anzahl von Federarmen 9, 10, 11 angeformt, die einschenklig ausgebildet sind und die sich in der in Fig. 1 dargestellten relaxierten Anordnung mit einem Schrägabschnitt 12 schräg von dem Fußring 8 weg weisend in Richtung der Auflageplatte 1 erstrecken. Jeder Federarm 9, 10, 11 weist weiterhin jeweils einen Axialabschnitt 13 auf, der sich von den dem Fußring 8 abgewandten Enden des Schrägabschnittes 12 in der relaxierten Anordnung des jeweiligen Federarmes 9, 10, 11 in etwa in axialer Richtung auf die Auflageplatte 1 zu erstreckt und mit seinem freien Ende jeweils in einem Abstand von der Auflageplatte 1 endet.

Jeder Federarm 9, 10, 11 ist zwischen zwei Verbindungsstegen 5, 6, 7 angeordnet, wobei zweckmäßigerweise die Abstände zwischen Verbindungsstegen 5, 6, 7 und Federarmen 9, 10, 11 in Umfangsrichtung gleich sind.

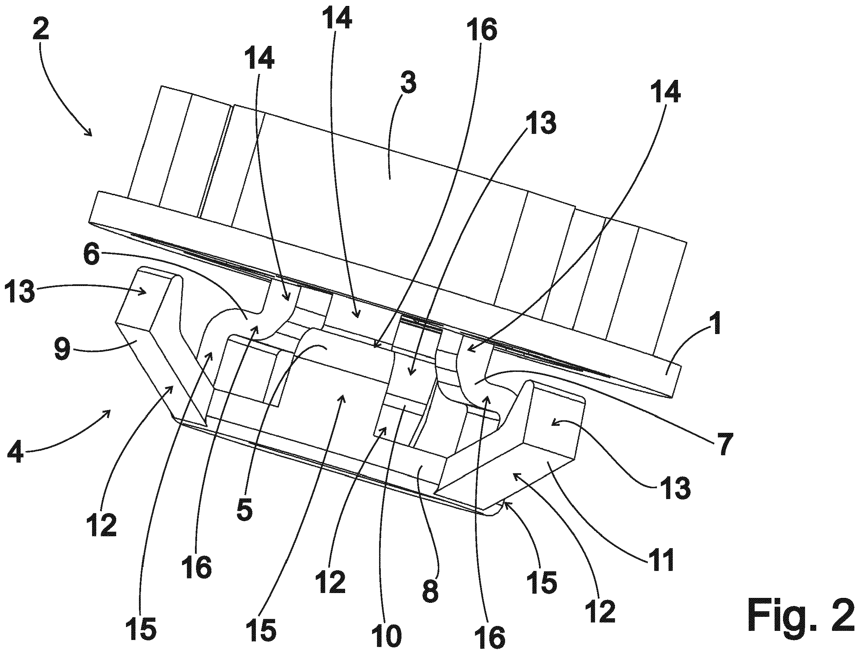

Fig. 2 zeigt das Ausführungsbeispiel gemäß Fig. 1 in einer Seitenansicht. Aus Fig. 2 ist ersichtlich, dass jeder Verbindungssteg 5, 6, 7 über einen mit der Auflageplatte 1 verbundenen Kopfabschnitt 14 und über einen mit dem Fußring 8 verbundenen Fußabschnitt 15 verfügt, die sich in axialer Richtung erstrecken und in radialer Richtung zueinander versetzt sind, wobei die Kopfabschnitte 14 gegenüber den Fußabschnitten 15 radial nach innen versetzt sind. Zwischen dem Kopfabschnitt 14 und dem Fußabschnitt 15 jedes Verbindungssteges 5, 6, 7 erstreckt sich ein in radialer Richtung ausgerichteter Radialabschnitt 16, der rechtwinklig zu dem jeweiligen Kopfabschnitt 14 und Fußabschnitt 15 ausgerichtet ist.

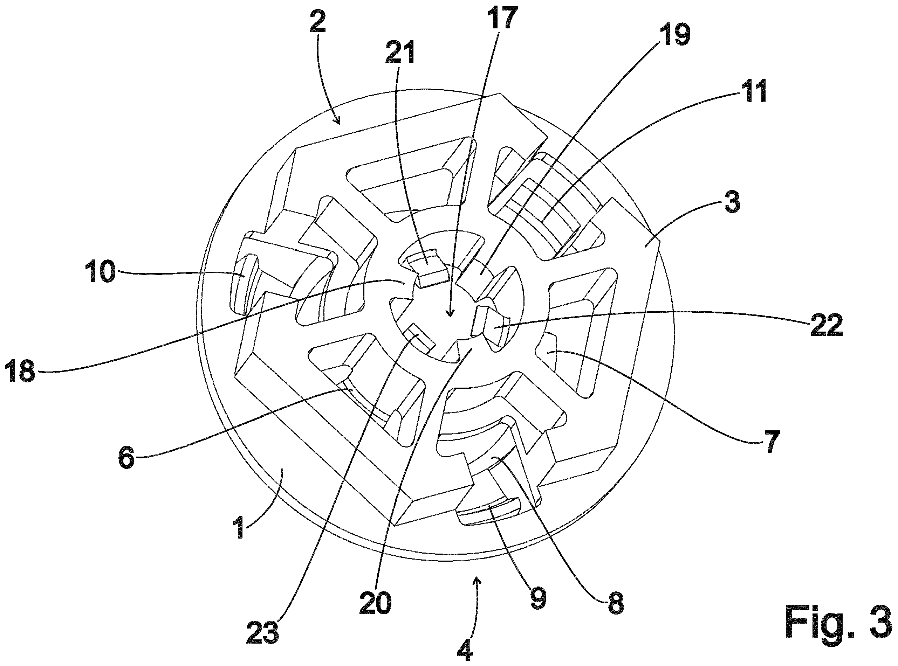

Fig. 3 zeigt in einer perspektivischen Ansicht das Ausführungsbeispiel gemäß Fig. 1 mit Blick auf die Werkzeugansatzstruktur 3. Aus Fig. 3 ist ersichtlich, dass die Werkzeugansatzstruktur 3 mit ihrem Außenumfang in Gestalt eines regelmäßigen Sechsecks nach Art einer Sechskantschraube ausgebildet ist. Weiterhin lässt sich der Darstellung gemäß Fig. 3 entnehmen, dass die Auflageplatte 1 eine mittige Bolzenaufnahmeausnehmung 17 aufweist, die sich ebenfalls durch die Werkzeugansatzstruktur 3 erstreckt. Im Bereich der Bolzenaufnahmeausnehmung 17 sind eine Anzahl von radial nach innen vorstehenden, sich in axialer Richtung erstreckenden Anlagerippen 18, 19, 20 ausgebildet, während zwischen zwei Anlagerippen 18, 19, 20 jeweils eine ebenfalls radial nach innen vorstehende zungenartige Hinterrastnase 21, 22, 23 vorhanden ist, deren freien Enden gegenüber den radial nach innen weisenden Enden der Anlagerippen 18, 19, 20 radial weiter innen liegend angeordnet sind.

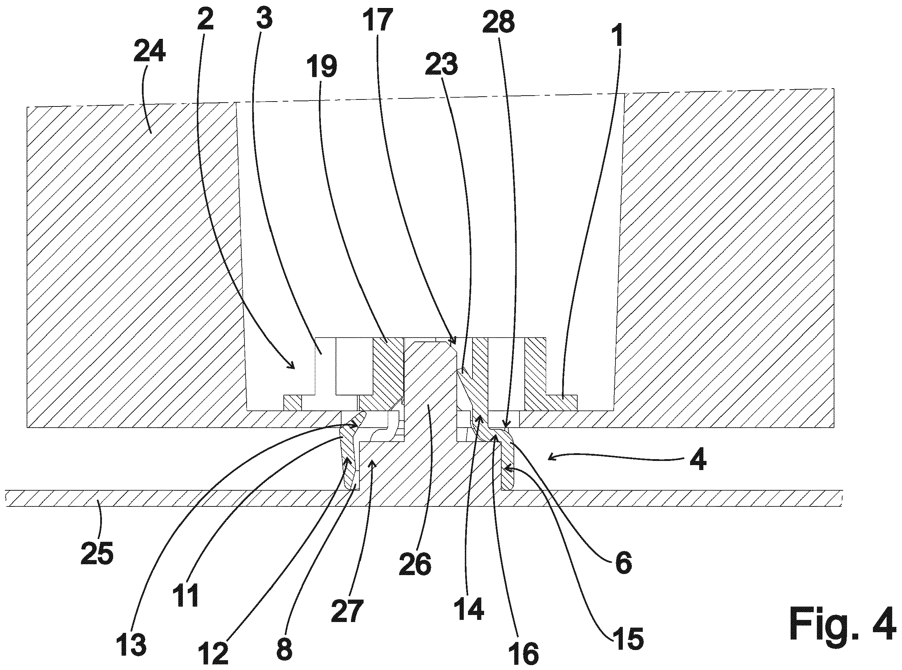

Fig. 4 zeigt das Ausführungsbeispiel gemäß Fig. 1 in einem Längsschnitt beim Befestigen eines Anbauteiles 24 an einem Trägerteil 25 in einer ersten Endmontageanordnung. Das Trägerteil 25 verfügt über einen Gewindebolzen 26, der sich in einer axialen Richtung von dem flachen Trägerteil 25 weg erstreckt und der im Verbindungsbereich mit dem Trägerteil 25 einen Fußsockel 27 aufweist. Das Anbauteil 24 ist mit einer Aufnahmeausnehmung 28 ausgebildet, durch die sich in der Darstellung gemäß Fig. 4 der Gewindebolzen 26 erstreckt. In der Anordnung gemäß Fig. 4 liegt die Auflageplatte 1 auf der dem Trägerteil 25 abgewandten Seite in einem Randabschnitt um die Aufnahmeausnehmung 28 an dem Anbauteil 24 auf, während der Gewindebolzen 26 in der Bolzenaufnahmeausnehmung 17 angeordnet, in radialer Richtung durch die Anlagerippen 18, 19, 20 spielfrei fixiert sowie durch Eingriff mit den Hinterrastnasen 21, 22, 23 in axialer Richtung gegen Herausziehen gesichert ist. Der Fußring 8 umschließt den Fußsockel 27, wobei in der Anordnung gemäß Fig. 4 der Fußabschnitt 15 eines Verbindungssteges 6 an der Außenseite des Fußsockels 27 anliegt. Der diesem Verbindungssteg 6 gegenüber liegende Federarm 11 ist dadurch verhältnismäßig weit bis zu einer nahezu axialen Ausrichtung des Schrägabschnittes 12 radial nach innen eingebogen.

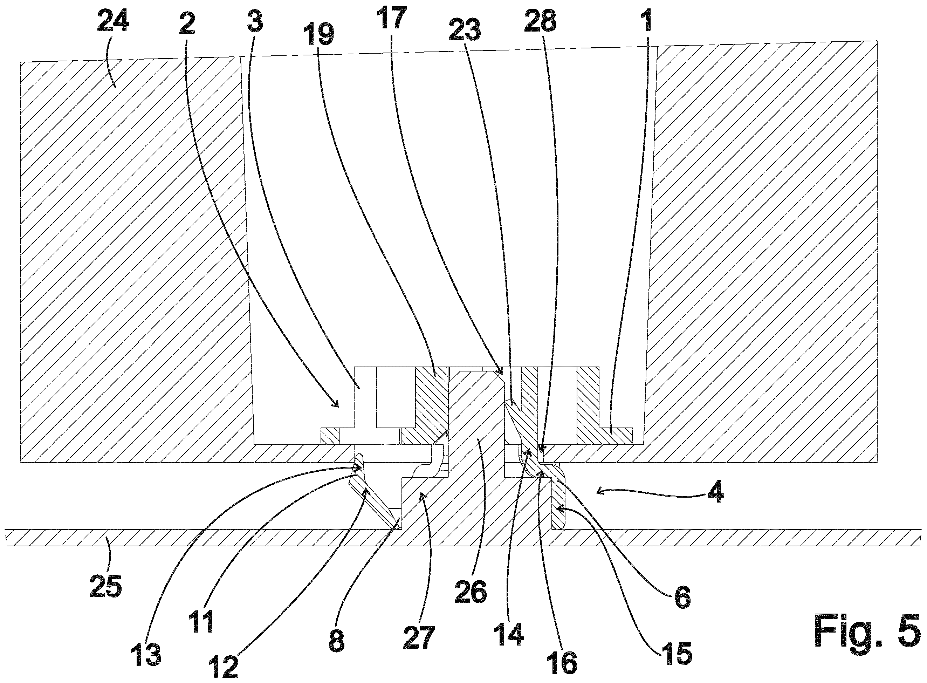

Fig. 5 zeigt in einer Darstellung entsprechend Fig. 4 die Anordnung von Anbauteil 24 und Trägerteil 25 mit einem gegenüber der Anordnung gemäß Fig. 4 relativen Versatz des Anbauteiles 24 gegenüber dem Trägerteil 25 in eine zweite Endmontageanordnung derart, dass nunmehr der in der Anordnung gemäß Fig. 4 stark eingefederte Federarm 11 in nahezu relaxierter Anordnung ist. In der Anordnung gemäß Fig. 5 liegt ein Randabschnitt der Aufnahmeausnehmung 28 auf den Radialabschnitt 16 des Verbindungssteges 6 auf, wodurch deutlich ersichtlich ist, dass durch die gegenüber den Fußabschnitten 15 radial weiter innen liegende Anordnung der Kopfabschnitte 14 ein sehr großer Toleranzausgleich in radialer Richtung geschaffen ist, welcher aufgrund des behinderungsfreien Federweges der Federarme 9, 10, 11 vollständig ausnutzbar ist.

## Patentansprüche

1. Vorrichtung zum toleranzausgleichenden Befestigen eines Anbauteiles (24) an einem Trägerteil (25) mit einer Auflageplatte (1) und mit einer Anzahl von in radialer Richtung federnd ausgebildeten Federarmen (9, 10, 11), wobei in einem axialen Abstand von der Auflageplatte (1) ein Fußring (8) vorhanden ist, an den die von der Auflageplatte (1) abgewandten Enden der Federarme (9, 10, 11) angeformt sind, wobei der Fußring (8) über eine Anzahl von Verbindungsstegen (5, 6, 7) mit der Auflageplatte (1) verbunden ist und wobei jeder Federarm (9, 10, 11) in Umfangsrichtung zwischen zwei Verbindungsstegen (5, 6, 7) angeordnet ist, **dadurch gekennzeichnet, dass** jeder Verbindungssteg (5, 6, 7) einen sich in axialer Richtung erstreckenden, mit dem Fußring (8) verbundenen Fußabschnitt (15), einen sich in axialer Richtung erstreckenden, mit der Auflageplatte (1) verbundenen sowie radial innenseitig des Fußabschnittes (15) angeordneten Kopfabschnitt (14) und einen den Kopfabschnitt (14) sowie den Fußabschnitt (15) verbindenden, sich in radialer Richtung erstreckenden Radialabschnitt (16) aufweist.

2. Vorrichtung nach Anspruch 1, **dadurch gekennzeichnet, dass** jeder Radialabschnitt (16) rechtwinklig zu dem jeweiligen Kopfabschnitt (14) und Fußabschnitt (15) ausgerichtet ist.

3. Vorrichtung nach Anspruch 1 oder Anspruch 2, **dadurch gekennzeichnet, dass** die Anzahl an Federarmen (9, 10, 11) und die Anzahl an Verbindungsstegen (5, 6, 7) gleich ist.

4. Vorrichtung nach einem der Ansprüche 1 bis 3, **dadurch gekennzeichnet, dass** eine Eingriffsstruktur (21, 22, 23) vorhanden ist, die zum Eingriff mit einer Gewindestruktur eingerichtet ist.

5. Vorrichtung nach Anspruch 4, **dadurch gekennzeichnet, dass** auf der den Federarmen (9, 10, 11) abgewandten Seite der Auflageplatte (1) eine Werkzeugansatzstruktur (3) vorhanden ist, die mit einem Werkzeug zum Drehen der Vorrichtung formschlüssig in Eingriff bringbar ist.

## Claims

1. Device for the tolerance-compensating fitting of an attachment (24) to a carrier part (25) with a support plate (1) and with a number of suspension arms (9, 10, 11) elastically designed in a radial direction, wherein a foot ring (8) is present at an axial distance from the support plate (1), on which the ends of the suspension arms (9, 10, 11) that face away from the support plate (1) are formed, wherein the foot ring (8) is connected with the support plate (1) via a number of connection bridges (5, 6, 7), and wherein each suspension arm (9, 10, 11) is arranged between two connection bridges (5, 6, 7) in a circumferential direction, **characterised in that** each connection bridge (5, 6, 7) has a foot section (15) connected with the foot ring (8) and extending in an axial direction, a head section (14) connected with the support plate (1) and extending in an axial direction as well as arranged radially inside the foot section (15), and a radial section (16) extending in a radial direction and connecting the head section (14) as well as foot section (15).

2. Device according to claim 1, **characterised in that** each radial section (16) is aligned at a right angle to the respective head section (14) and foot section (15).

3. Device according to claim 1 or claim 2, **characterised in that** the number of suspension arms (9, 10, 11) and the number of connection bridges (5, 6, 7) are identical.

4. Device according to one of the claims 1 to 3, **characterised in that** an engagement structure (21, 22, 23) is present, which is equipped for engaging with a thread structure.

5. Device according to claim 4, **characterised in that** a tool base structure (3) is present on the side of the support plate (1) that faces away from the suspension arms (9, 10, 11), which can be brought into engagement with a tool by means of form closure for rotating the device.

## Revendications

1. Dispositif permettant la fixation avec compensation de tolérances d'un élément rapporté (24) sur une partie support (25) et une plaque d'appui (1) et un certain nombre de bras élastiques (9, 10, 11) élastiques en direction radiale, comportant, à une distance axiale de la plaque d'appui (1), une bague inférieure (8) sur laquelle sont formées les extrémités des bras élastiques (9, 10, 11) détournées de la plaque d'appui (1), la bague inférieure (8) étant reliée avec la plaque d'appui (1) par un certain nombre d'éléments de liaison (5, 6, 7) et chaque bras élastique (9, 10, 11) étant disposé entre deux éléments de liaison (5, 6 7) dans la direction périphérique, **caractérisé en ce que** chaque élément de liaison (5, 6, 7) présente une section inférieure (15) s'étendant en direction axiale et reliée avec la bague inférieure (8), une section supérieure (14) s'étendant en direction axiale et reliée à la plaque d'appui (1) et disposé radialement à l'intérieur de la section inférieure (15) et une section radiale (16) reliant la section supérieure (14) ainsi que la section inférieure (15) et s'étendant en direction radiale.

2. Dispositif selon la revendication 1, **caractérisé en ce que** chaque section radiale (16) est orientée perpendiculairement à la section supérieure (14) et à la section inférieure (15) respectives.

3. Dispositif selon la revendication 1 ou 2, **caractérisé en ce que** le nombre de bras élastiques (9, 10, 11) est égal au nombre d'éléments élastiques (5, 6, 7).

4. Dispositif selon l'une des revendications de 1 à 3, **caractérisé en ce qu'**il existe une structure de prise (21, 22, 23) conçue pour la mise en prise avec une structure de filetage.

5. Dispositif selon la revendication 4, **caractérisé en ce qu'**il existe sur le côté de la plaque d'appui (1) détourné des bras élastiques (9, 10, 11) une structure d'insert d'outil (3) qui peut venir en prise par liaison de forme à l'aide d'un outil servant à tourner le dispositif.
